# EUROPÄISCHE PATENTSCHRIFT

(11) **EP 3 342 622 B1**
(45) Veröffentlichungstag und Bekanntmachung des Hinweises auf die Patenterteilung: **30.03.2022**
(21) Anmeldenummer: 17150026.7
(22) Anmeldetag: 02.01.2017
(51) Int. Cl.: B60K 37/06, G06F 3/0482, G06F 3/0485

(54) **VERFAHREN ZUM BETREIBEN EINER BEDIENSCHNITTSTELLE UND BEDIENSCHNITTSTELLE**
METHOD FOR OPERATING A USER INTERFACE AND USER INTERFACE
PROCÉDÉ DE FONCTIONNEMENT D'UNE INTERFACE UTILISATEUR ET INTERFACE UTILISATEUR

(43) Veröffentlichungstag der Anmeldung: 04.07.2018
(73) Patentinhaber: VOLKSWAGEN AKTIENGESELLSCHAFT, 38440 Wolfsburg (DE)
(72) Erfinder: Kögler, Indra-Lena, 10829 Berlin (DE); Petersen, Sönke, 12205 Berlin (DE)

(56) Entgegenhaltungen:
- WO-A1-2013/160218
- WO-A1-2014/177297
- US-A1- 2007 189 737

## Beschreibung

Verfahren zum Betreiben einer Bedienschnittstelle und Bedienschnittstelle Die vorliegende Erfindung betrifft ein Verfahren zum Betreiben einer Bedienschnittstelle sowie eine Bedienschnittstelle.

Die zunehmende Integration elektronischer Einrichtungen in den modernen Alltag, insbesondere auch in Kraftfahrzeugen, führt zu einem großen Bedarf an Möglichkeiten, Informationen anzuzeigen und dem Nutzer Eingabe- und Bedienmöglichkeiten zur Verfügung zu stellen. Dies erfolgt insbesondere mithilfe von Anzeigen und Touchscreens, die nicht nur die Ausgabe von Daten für verschiedene Einrichtungen, sondern auch deren Steuerung durch die Erfassung von Nutzereingaben erlauben.

Dabei stellt sich bei bekannten Systemen das Problem, die Vielzahl der darstellbaren Informationen und Bedienmöglichkeiten sinnvoll und übersichtlich gegliedert bereitzustellen sowie eine einfache Vornahme von Einstellungen zu gewährleisten. Bekannte Systeme sehen hierzu vor, Informationen und Bedienmöglichkeiten für digitale Objekte in einer hierarchisch gegliederten Struktur zu organisieren und dem Nutzer eine Bedienung zu ermöglichen, indem er durch verschiedene Stufen dieser Struktur navigiert.

Die US2007/189737A1 offenbart insbesondere ein Verfahren zum Betreiben einer Bedienschnittstelle, sowie die passende Schnittstelle.

Der vorliegenden Erfindung liegt die Aufgabe zugrunde, ein Verfahren zum Betreiben einer Bedienschnittstelle und eine Bedienschnittstelle bereitzustellen, die einen besonders einfachen und flexiblen Zugang zu verschiedenen Informationen und Bedienmöglichkeiten elektronischer Einrichtungen erlauben.

Erfindungsgemäß wird diese Aufgabe durch ein Verfahren mit den Merkmalen des Anspruchs 1 und eine Bedienschnittstelle mit den Merkmalen des Anspruchs 9 gelöst. Vorteilhafte Ausgestaltungen und Weiterbildungen ergeben sich aus den abhängigen Ansprüchen.

Bei dem erfindungsgemäßen Verfahren werden Daten einer Liste erfasst, wobei die Liste Listeneinträge umfasst und den Listeneinträgen jeweils Eintragsmerkmale zugeordnet sind. Es wird eine Listendarstellung mit grafischen Symbolobjekten für zumindest eine Teilmenge der Listeneinträge erzeugt und angezeigt, wobei den grafischen Symbolobjekten jeweils ein Anzeigebereich zugeordnet ist. Es wird eine Bedienhandlung für ein Symbolobjekt eines Listeneintrags erfasst, wobei die Bedienhandlung eine Eingabebewegung mit einer Eingaberichtung umfasst. Eine Detaildarstellung für das bediente Symbolobjekt wird erzeugt und angezeigt. In Abhängigkeit von der Eingaberichtung der Bedienhandlung wird eine Verschiebung des bedienten Symbolobjekts relativ zu der Listendarstellung angezeigt und die dargestellte Teilmenge der zugeordneten Eintragsmerkmale ist bei der Detaildarstellung größer ist als bei der Listendarstellung.

Dies erlaubt vorteilhafterweise ein einfaches Aufrufen und eine besonders übersichtliche Ausgabe von zusätzlichen Informationen und Optionen für einen Listeneintrag. Während bei der Listendarstellung eine kleinere Teilmenge der Eintragsmerkmale angezeigt wird, umfasst die Anzeige der Detaildarstellung eine größere dargestellte Teilmenge. Im äußersten Fall ist die Teilmenge bei der Listendarstellung eine leere Menge und bei der Detaildarstellung eine nichtleere Teilmenge.

Besonders beim Einsatz in einem Fahrzeug kommen die Vorteile der Erfindung zum Tragen, da hier ein Nutzer, insbesondere der Fahrer des Fahrzeugs, möglichst wenig abgelenkt werden soll und daher eine mit minimaler Aufmerksamkeit bedienbare Bedienschnittstelle bereitgestellt werden soll. Dies wird bei der Erfindung vor allem durch eine einfache Anpassung der Anzeige und eine flexibel steuerbare Informationsmenge erreicht, wobei der Nutzer bei der Bedienung zudem eine besonders klare und einfach erfassbare Rückmeldung erhält.

Die Daten der Liste können dabei auf an sich bekannte Weise erfasst werden, beispielsweise anhand einer dauerhaften oder trennbaren datentechnischen Verbindung zu einer Recheneinheit und/oder einer Speichereinheit. Die Liste wird dabei insbesondere mittels einer Datenbank bereitgestellt und umfasst als Listeneinträge zusammengehörige Informationseinheiten, beispielsweise Einträge einer bestimmten Kategorie oder einer Einheit innerhalb der Struktur der Datenbank.

Die Listendarstellung wird auf an sich bekannte Weise erzeugt und ausgegeben. Sie umfasst zumindest eine Teilmenge der Liste, das heißt, nicht alle Listeneinträge sind notwendigerweise gleichzeitig von der Listendarstellung umfasst. Insbesondere ist vorgesehen, dass die Listendarstellung so veränderbar ist, dass eine andere Teilmenge der Listeneinträge umfasst ist, wobei sämtliche Listeneinträge der Liste erreicht werden können. Beispielsweise kann ein scrollen durch verschiedene Teilmengen der Liste vorgesehen sein. Dabei werden für die Listendarstellung grafische Symbolobjekte genutzt, die einen Listeneintrag repräsentieren. Dies kann beispielsweise eine bildhafte Darstellung sein, etwa ein Symbolbild, Profilbild oder Beispielbild. Ferner kann, wenn sich der Listeneintrag auf ein Bild oder grafisches Objekt bezieht, das grafische Symbolobjekt eine Darstellung des Listeneintrags selbst umfassen, gegebenenfalls mit veränderter Größe. Die Anordnung der grafischen Symbolobjekte innerhalb der Listendarstellung wird ebenfalls auf an sich bekannter Weise gebildet, beispielsweise neben- oder übereinander, anhand einer Matrix angeordnet oder in einer beliebigen, freien Anordnung innerhalb der Listendarstellung.

Für die den Listeneinträgen zugeordneten Symbolobjekte sind innerhalb der Listendarstellung jeweils Anzeigebereiche vorgesehen. Dies kann beispielsweise eine das Symbolobjekt umgebende Fläche einer bestimmten Größe sein. Diese Fläche kann auf unterschiedliche Weisen gebildet werden. Sie kann beispielsweise rechteckig oder auf andere Weise, insbesondere als kachelartige geometrische Figur ausgebildet sein. Dabei können die Grenzen des einem Symbolobjekt zugeordneten Anzeigebereichs sichtbar dargestellt werden oder unsichtbar sein. Ferner können sich die Anzeigebereiche durch eine bestimmte Hintergrunddarstellung, etwa eine Farbe, eine Hintergrundbild oder eine Helligkeit, von dem umgebenden Hintergrund der Darstellung abheben.

Es wird eine Bedienhandlung für ein Symbolobjekt der Listendarstellung erfasst. Zur Durchführung der Bedienhandlung kann eine an sich bekannte Bedienvorrichtung verwendet werden. Ferner kann vorgesehen sein, dass ein Betätigungsobjekt verwendet wird, insbesondere die Hand eines Nutzers, ein Stift, eine Computermaus oder eine andere Vorrichtung zum Steuern eines elektronischen Zeigers. Die Bedienhandlung wird dem Symbolobjekt zugeordnet, in dem die Position der Durchführung der Bedienhandlung mit der Position der Anzeige des Symbolobjekt verglichen wird. Erfolgt die Bedienung im Bereich des angezeigten Symbolobjekts oder innerhalb eines weiteren, dem Symbolobjekt zugeordneten Bereichs, so wird die Bedienhandlung als Bedienung des Symbolobjekt interpretiert.

Die von der Bedienhandlung umfasste Eingabebewegung kann auf unterschiedliche Weise ausgebildet sein, wobei die Bedienhandlung insbesondere eine Geste umfasst. Unter einer "Geste" wird eine bestimmte Stellung des Betätigungsobjekts und/oder eine bestimmte Bewegung, die mit dem Betätigungsobjekt ausgeführt wird, verstanden. Die Gesten können nach an sich bekannter Art ausgestaltet sein. Sie umfassen insbesondere Zeigegesten, Wischgesten und solche Gesten, die im alltäglichen Gebrauch verwendet werden, z.B. Handdrehungen, Greifgesten und Kombinationen mehrerer solcher, ggf. unmittelbar kurz nacheinander ausgeführter Gesten.

Die Gesten werden in einem Detektionsraum ausgeführt, insbesondere mit einem räumlichen Bezug zu einer Anzeige. Dabei kann der Detektionsraum beispielsweise einen bestimmten räumlichen Bereich vor der Anzeige der Listendarstellung umfassen oder der Informationsbereich kann im Wesentlichen auf die Oberfläche einer Anzeigefläche beschränkt sein, durch welche die Anzeige der Listendarstellung erfolgt. Gesten auf einer Oberfläche können beispielsweise ein Antippen, eine Wischgeste oder eine Geste zum Schieben oder Ziehen eines dargestellten Objekts umfassen.

Die Eingaberichtung wird dabei anhand einer Bewegungsrichtung oder eines Bewegungsablaufs der Geste erfasst. Ferner wird die Geste einem Symbolobjekt eines Listeneintrags zugeordnet, insbesondere durch einen räumlichen Bezug zwischen der Position der Anzeige des Symbolobjekts und der Position des Betätigungsobjekts bei der Durchführung der Geste.

Bei dem Übergang von der Listendarstellung zu der Detaildarstellung wird eine Verschiebung des bedienten Symbolobjekt dargestellt, wobei die Verschiebung auf unterschiedliche Weisen in Abhängigkeit von der Eingaberichtung der Bedienhandlung sowie gegebenenfalls anderen Merkmalen der Bedienhandlung gebildet werden kann.

Insbesondere wird auf diese Weise die Anordnung des Symbolobjekts innerhalb der Darstellung und/oder die Darstellung des Symbolobjekts selbst so verändert, dass die verfügbare Fläche zur Darstellung von Eintragsmerkmalen für das Symbolobjekt vergrößert wird.

Dies erlaubt dann in der Detailanzeige die Anzeige einer gegenüber der Listendarstellung größeren Teilmenge zugeordneter Eintragsmerkmale. Beispielsweise kann die Listendarstellung neben den Symbolobjekten eine Basisinformation umfassen, während die Detaildarstellung weitere Informationen umfasst. Dabei ist der Informationsumfang bei der Detaildarstellung gegenüber der Listendarstellung vergrößert, insbesondere werden mehr verschiedene Eintragsmerkmale angezeigt.

Die Anzeige der Eintragsmerkmale erfolgt dabei auf an sich bekannte Weise. Die Eintragsmerkmale werden mittels Anzeigeelementen ausgegeben, sodass die Anzahl der angezeigten Eintragsmerkmale bestimmbar ist. Entsprechend kann bestimmt werden, dass die Zahl der ausgegebenen Eintragsmerkmale in der Listendarstellung kleiner ist als bei der Detaildarstellung.

Insbesondere repräsentiert ein grafisches Objekt und/oder eine Textdarstellung ein Eintragsmerkmal, wobei dabei eine Information über das Eintragsmerkmal ausgegeben wird. Die jeweilige Ausbildung hängt von dem konkreten Eintragsmerkmal ab, beispielsweise kann ein Text angezeigt werden, um eine Textinformation eines Eintragsmerkmals auszugeben, ein Symbol kann angezeigt werden, um eine Ja/Nein-Information auszugeben, oder ein Bild kann angezeigt werden, welches mit dem Eintragsmerkmal in inhaltlicher oder symbolischer Verbindung steht.

Bei einer Ausbildung des erfindungsgemäßen Verfahrens umfasst die Verschiebung des bedienten Symbolobjekt eine Bewegung eines geometrischen Schwerpunkts des Symbolobjekts in Richtung der Eingaberichtung der Bedienhandlung. Dadurch kann vorteilhafterweise die Verschiebung dargestellt werden, selbst wenn gleichzeitig weitere Transformationen, etwa eine Skalierung, für das Symbolobjekt ausgegeben werden.

Alternativ oder zusätzlich kann die Verschiebung auf eine andere Weise gebildet werden, beispielsweise indem eine Kante des Symbolobjekts verschoben wird.

Bei einer weiteren Ausbildung wird die Verschiebung des Symbolobjekts synchron zu der erfassten Bedienhandlung gebildet, insbesondere während der Durchführung der Bedienhandlung. Dadurch wird vorteilhafterweise eine besonders leicht und intuitiv verständliche Rückmeldung für die Bedienhandlung gegeben,
Die Bedienhandlung umfasst eine Eingaberichtung und daher auch eine Eingabebewegung. Unter einer "synchronen" Bewegung wird erfindungsgemäß verstanden, dass die Verschiebung einen Bewegungsablauf umfasst, der einen zeitlichen und dynamischen Zusammenhang mit der Eingabebewegung aufweist. Insbesondere wird die Verschiebung während der Durchführung der Eingabebewegung und/oder mit der gleichen Geschwindigkeit wie die Eingabebewegung ausgeführt. Der Verlauf der Verschiebung des Symbolobjekts, insbesondere ihre Geschwindigkeit und/oder Richtung, wird also anhand der Geschwindigkeit und/oder Richtung der Eingabebewegung bei der Bedienhandlung gebildet. Vorzugsweise verläuft die Geschwindigkeit der Verschiebung proportional zur oder gleich wie die Geschwindigkeit der Eingabebewegung. Auf diese Weise wird einem Nutzer beim Durchführen der Bedienhandlung eine direkte Rückmeldung über die Erfassung der Eingabebewegung gegeben.

Ferner kann vorgesehen sein, dass für das bediente Symbolobjekt zumindest eine Verschiebbarkeitsrichtung definiert ist und die Verschiebung anhand einer Projektion der Eingaberichtung der Bedienhandlung auf die Verschiebbarkeitsrichtung durchgeführt wird. Beispielsweise kann ein Symbolobjekt in eine vertikale Richtung verschiebbar sein und bei einer schrägen Eingaberichtung so verschoben werden, wie dies der Projektion der Eingaberichtung auf die vertikale Richtung entspricht. Verschiedene an sich bekannte Verfahren, die Verschiebung anhand einer Eingaberichtung zu bestimmen, können angewandt und/oder kombiniert werden, wobei als Randbedingungen die Gestaltung der Listen- und Detailanzeige zu beachten ist.

Bei einer weiteren Ausbildung wird der dem bedienten Symbolobjekt zugeordnete Anzeigebereich vergrößert. Dadurch wird vorteilhafterweise eine größere Fläche für die Anzeige der größeren Teilmenge der Eintragsmerkmale bereitgestellt.

Die Vergrößerung des Anzeigebereichs, der dem bedienten Symbolobjekt zugeordnet ist, kann auf verschiedene Weisen erfolgen. Zum Beispiel kann ein rechteckig ausgeprägter Anzeigebereich in eine oder zwei Richtungen skaliert werden. Ferner kann die Vergrößerung zusammen mit einer Verschiebung des Anzeigebereichs dargestellt werden. Der vergrößerte Anzeigebereich wird insbesondere genutzt, um weitere Eintragsmerkmale anzuzeigen. Insbesondere kann der Umfang der dargestellten Informationen vergrößert werden, beispielsweise indem zusätzliche Merkmale mittels einer Textdarstellung ausgegeben werden.

Erfindungsgemäss ist das Symbolobjekt bei der Detaildarstellung gegenüber der Listendarstellung verkleinert. Auf diese Weise kann bei der Detaildarstellung der verfügbare Anzeigebereich besser für die Anzeige einer größeren Teilmenge der zugeordneten Eintragsmerkmale genutzt werden. Insbesondere kann die Verkleinerung des Symbolobjekts alternativ oder zusätzlich zu der Vergrößerung des dem Symbolobjekt zugeordneten Anzeigebereichs erfolgen.

Die Verkleinerung kann erfindungsgemäss während der Darstellung der Verschiebung durchgeführt werden, etwa proportional zu dem bei der Verschiebung zurückgelegten Weg des Symbolobjektes. Neben einer Verkleinerung des Symbolobjekt unter Beibehaltung der Seitenverhältnisse kann ferner eine Stauchung in eine Richtung durchgeführt werden oder das Symbolobjekt kann durch ein anderes als das in der Listendarstellung angezeigte ersetzt werden, wobei dieses an der verschobenen Position des Symbolobjekt angezeigt wird. Beispielsweise kann ein anderes Bild oder eine vereinfachte Darstellung angezeigt werden.

Bei einer Weiterbildung werden Symbolobjekte, für die keine Bedienung erfasst wurde, bei der Detaildarstellung gegenüber dem bedienten Symbolobjekt dunkler angezeigt. Dadurch werden vorteilhafterweise das bediente Symbolobjekt und dessen Anzeigebereich mit den dort dargestellten Eintragsmerkmalen besonders hervorgehoben, während die nicht bedienten Symbolobjekte geringere Aufmerksamkeit auf sich ziehen. Auf diese Weise wird zudem eine besonders schnelle Erfassung der dargestellten Informationen gewährleistet.

Ferner kann vorgesehen sein, dass die nicht bedienten Symbolobjekte in der Detaildarstellung gegenüber der Listendarstellung ausgeblendet werden. Zudem können alternativ oder zusätzlich weitere grafische Effekte verwendet werden, um eine Hervorhebung des bedienten Symbolobjekts und/oder des ihm zugeordneten Anzeigebereichs zu erreichen, beispielsweise durch einen auf hervorhebende Weise gebildeten Kontrast gegenüber den weiteren Symbolobjekten und/oder Anzeigebereichen, durch einen Helligkeitsparameter, durch eine farbliche Gestaltung und/oder zeitlich veränderliche, dynamische Darstellung.

Alternativ oder zusätzlich kann ein perspektivischer Effekt für das bediente Symbolobjekt und die weiteren Symbolobjekte erzeugt werden, beispielsweise durch eine Darstellung, bei welcher die nicht bedienten Symbolobjekt in den Hintergrund zu rücken scheinen, während gegebenenfalls das bediente Symbolobjekt in den Vordergrund zu rücken scheint. Ferner kann die Detaildarstellung gegenüber der Listendarstellung so verändert werden, dass Abstände zwischen Symbolobjekt vergrößert werden, beispielsweise um das bediente Schaltobjekt und den ihm zugeordneten Anzeigebereich stärker hervorgehoben darzustellen. Auch diese perspektivischen oder weiteren Effekte können mit der Eingabebewegung synchronisiert angezeigt werden, beispielsweise indem das bediente Symbolobjekt umso stärker verkleinert wird, wie länger die bei der Eingabebewegung zurückgelegte Strecke ist.

Bei einer Ausbildung sind die Listeneinträge Kontakte eines elektronischen Telefonbuchs oder Mediendateien, wobei die Eintragsmerkmale Zusatzinformationen und/oder Bedienmöglichkeiten umfassen. Dadurch können vorteilhafterweise besonders relevante Daten anhand der Liste ausgegeben und entsprechende zugeordnete Daten einfach abgerufen werden.

Die Daten eines Kontakts eines elektronischen Telefonbuchs können beispielsweise Kontaktdaten für eine Person oder Einrichtung umfassen. Beispielsweise können Telefonnummern, Adressen, E-Mail-Adressen, Kontaktdaten für soziale Netzwerke oder andere Kommunikationssysteme, Beziehungen zu anderen Kontakten oder weitere Zusatzinformationen bereitgestellt werden. Dabei können ferner Haupteinträge für Zusatzinformationen verschiedener Kategorien vorgesehen sein, beispielsweise unter mehreren Telefonnummern eine Standardnummer oder unter mehreren Adressen eine Hauptadresse.

Des Weiteren können die Listeneinträge Mediendateien zugeordnet sein und die Informationen beispielsweise einen Titel, einen Interpreten, einen Albumnamen, ein Erscheinungsjahr oder weitere umfassen.

Ausgehend von verschiedenen Typen von Listeneinträgen und Eintragsmerkmalen können verschiedene Arten der Anzeige für die Listendarstellung und die Detaildarstellung erzeugt werden. Beispielsweise kann die Listendarstellung neben den Symbolobjekten eine Basisinformation umfassen, bei Kontakten eines elektronischen Telefonbuchs beispielsweise einen Namen einer Person oder bei einer Mediendatei einen Titel. Dagegen kann die Detaildarstellung weitere Informationen umfassen, etwa Telefonnummern und Adressen des Kontakts beziehungsweise Bedienaktionen für die Mediendatei. Andere Typen von Listeneinträgen und/oder Eintragsmerkmalen sind selbstverständlich möglich und können beliebig miteinander kombiniert werden, insoweit dies für die erfasste Liste zweckmäßig ist.

Ferner können die Eintragsmerkmale Bedienmöglichkeiten umfassen. Dies sind insbesondere Daten, die eine Interaktion mit weiteren Einrichtungen ermöglichen, etwa die Nutzung einer Telefonnummer zum Durchführen eines Anrufs oder einer Adresse zum Initiieren einer Navigation. Ferner kann eine Wiedergabe einer Mediendatei mittels eines Wiedergabeprogramms eine mögliche Bedienmöglichkeit sein. Interaktionen mit sozialen Netzwerken können vorgenommen werden, etwa um mit einem Listeneintrag verknüpfte Informationen bereitzustellen oder um ein bestimmtes Profil zu kontaktieren oder aufzurufen. Zudem können Daten eines Listeneintrags an weitere Einrichtungen übertragen werden, etwa um eine Mediendatei aus einer Wiedergabeliste (Playlist) zu entfernen oder die Wiedergabeliste kann verändert werden, etwa um zu dem jeweiligen Listeneintrag ähnliche Medien abzuspielen. Ferner kann eine Datei der Datenbank verändert werden, etwa durch Löschen, Verändern von gespeicherten Eintragsmerkmalen oder Ähnliches.

Bei weiteren Ausführungsformen können weitere Funktionen von Einrichtungen gesteuert werden, in dem durch die Bedienmöglichkeiten der Eintragsmerkmale Bedienoptionen und Einstellmöglichkeiten bereitgestellt werden.

Bei einer weiteren Ausbildung umfasst die Bedienhandlung eine Bewegung auf einer berührungsempfindlichen Oberfläche. Insbesondere wird die Bedienhandlung mittels eines Touchscreens erfasst, durch den auch die Anzeige der Listendarstellung sowie der Detaildarstellung erfolgen kann. Dadurch vorteilhafterweise eine besonders einfache und intuitiv verständliche Bedienung ermöglicht.

Bei einer Weiterbildung sind die Symbolobjekte der Listendarstellung in einer Reihe entlang einer Erstreckungsrichtung angeordnet und die Bedienhandlung umfasst eine Schiebegeste in eine Richtung senkrecht zur Erstreckungsrichtung. Die Bedienung ist dadurch vorteilhafterweise besonders schnell erlernbar und bietet eine besonders einfache Möglichkeit, das bediente Symbolobjekt relativ zu anderen Symbolobjekten zu verschieben.

Die Schiebegeste ist insbesondere so gebildet, dass die Verschiebung des Symbolobjektes synchron zur Eingabebewegung besonders leicht nachvollzogen werden kann. Sie umfasst bei einer Ausführung auf einer berührungsempfindlichen Oberfläche eine Abfolge von Berühren der Oberfläche an einer dem Symbolobjekt zugeordneten Position, Bewegungen entlang der Oberfläche in die Eingaberichtung und Lösen der Bewegung am Ende der Eingabe. Insbesondere wird dabei die zwischen der Start- und Endposition zurückgelegte Strecke als Benutzereingabe berücksichtigt.

Insbesondere sind die Symbolobjekte nebeneinander angeordnet, in weiteren Ausführungen kann jedoch eine Anordnung übereinander, an einer Matrix oder auf andere Weise vorgesehen sein.

Bei einer Ausbildung wird ferner während der Anzeige der Detaildarstellung eine zweite Bedienhandlung erfasst und anhand der zweiten Bedienhandlung wird die Listendarstellung erzeugt und angezeigt, wobei eine Zurückverschiebung des Symbolobjekts angezeigt wird. Dadurch kann vorteilhafterweise eine Rückkehr zur Listendarstellung erreicht werden.

Die zweite Bedienhandlung kann auf verschiedene Weisen ausgebildet sein. Sie kann beispielsweise eine weitere Eingabebewegung umfassen, durch die etwa eine Verschiebung des Symbolobjekts so durchgeführt wird, dass die Verschiebung beim Übergang von der Listendarstellung zur Detaildarstellung rückwärts vollzogen wird. Alternativ oder zusätzlich kann die zweite Bedienhandlung als Tippgeste in einem bestimmten Bereich der Anzeige und/oder als Betätigung einer Schaltfläche ausgebildet sein.

Bei einer weiteren Ausbildung werden die in der Detailansicht angezeigten Eintragsmerkmale als bedienbare Grafikelemente angezeigt. Dadurch kann vorteilhafterweise eine Bedienung direkt anhand der angezeigten Eintragsmerkmale erfolgen.

Beispielsweise kann eine Telefonnummer, die für einen Kontakt eines elektronischen Telefonbuchs angezeigt wird, direkt gewählt werden oder es kann eine Navigation zu einer bestimmten Adresse gestartet werden. In einem weiteren Beispiel kann eine Mediendatei als Favorit markiert werden. Die Anzeige der Eintragsmerkmale als bedienbares Grafikelemente kann dabei auf verschiedene Weise erfolgen, beispielsweise indem ein Eintragsmerkmal als Text ausgegeben wird, der selbst als bedienbare Fläche innerhalb der Anzeige dient.

Die erfindungsgemäße Bedienschnittstelle umfasst eine Schnittstelle, durch die Daten einer Liste erfassbar sind, wobei die Liste Listeneinträge umfasst und den Listeneinträgen jeweils Eintragsmerkmale zugeordnet sind. Sie umfasst ferner eine Steuereinheit, durch die eine Listendarstellung mit grafischen Symbolobjekten für zumindest eine Teilmenge der Listeneinträge erzeugbar und mittels einer Anzeigeeinheit anzeigbar ist. Dabei ist dem grafischen Symbolobjekt jeweils ein Anzeigebereich zugeordnet. Die Bedienschnittstelle umfasst ferner eine Erfassungseinheit, durch die eine Bedienhandlung für ein Symbolobjekt eines Listeneintrags erfassbar ist. Dabei umfasst die Bedienhandlung eine Eingabebewegung mit einer Eingaberichtung und es ist eine Detaildarstellung für das bediente Symbolobjekt erzeugbar und anzeigbar. In Abhängigkeit von der Eingaberichtung der Bedienhandlung ist eine Verschiebung des bedienten Symbolobjekts relativ zu der Listendarstellung anzeigbar und die dargestellte Teilmenge der zugeordneten Eintragsmerkmale ist bei der Detaildarstellung größer als bei der Listendarstellung.

Die erfindungsgemäße Bedienschnittstelle ist insbesondere ausgebildet, das vorstehend beschriebene erfindungsgemäße Verfahren zu implementieren. Die Bedienschnittstelle weist somit dieselben Vorteile auf wie das erfindungsgemäße Verfahren.

Bei einer Ausbildung der erfindungsgemäßen Bedienschnittstelle umfasst die Erfassungseinheit eine berührungsempfindliche Oberfläche. Insbesondere ist die Anzeigeeinheit als Touchscreen mit der berührungsempfindlichen Oberfläche ausgebildet. Dadurch kann vorteilhafterweise eine besonders einfache Bedienung mittels einer kombinierten Einheit zur Herausgabe und Eingabe von Daten implementiert werden.

Beispielsweise kann eine Folie über einer Anzeigefläche des Touchscreens angeordnet sein, mit welcher die Position einer Berührung eines Betätigungsobjekts detektiert werden kann. Bei dem Betätigungsobjekt handelt es sich insbesondere um die Fingerspitze eines Nutzers. Die Folie kann zum Beispiel als resistive Touchfolie, kapazitive Touchfolie oder piezoelektrische Folie ausgebildet sein. Ferner kann die Folie so ausgebildet sein, dass ein Wärmestrom, der zum Beispiel von der Fingerspitze eines Nutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position erfasst und einem auf der Anzeigefläche angezeigten graphischen Objekt, insbesondere einem Symbolobjekt, zugeordnet werden. Des Weiteren kann die Dauer der Berührung bei einer bestimmten Position oder innerhalb eines bestimmten Bereichs erfasst werden.

Ferner können Gesten erfasst werden, wobei eine Bewegung des Betätigungsobjekts entlang der Oberfläche bei fortdauernder Berührung erfasst wird. Insbesondere sind dabei grafische Objekte, die auf der Anzeigefläche ausgegeben werden, bedienbar, wobei Manipulationen vorgenommen werden können, etwa eine Veränderung der Anordnung und/oder Darstellung der grafischen Objekte.

Bei einer weiteren Ausbildung sind die Daten der Liste mittels der Schnittstelle von einem mobilen Nutzergerät erfassbar. Dadurch können vorteilhafterweise verschiedene Datenquellen flexibel integriert werden. Alternativ oder zusätzlich können die Daten der Liste von einem externen Server abgerufen werden, zu dem eine datentechnische Verbindung herstellbar ist. Ferner können andere Datenquellen vorgesehen sein, beispielsweise manuelle Eingaben oder Listen, die anhand eines Datenträgermediums erfasst werden, beispielsweise einer CD oder DVD.

Bei einer Weiterbildung ist während der Darstellung der Detailansicht eine Betätigungshandlung für eines der angezeigten Eintragsmerkmale erfassbar und in Abhängigkeit von dem betätigten Eintragsmerkmal sind Steuersignale für eine weitere Einrichtung erzeugbar und ausgebbar. Dadurch können vorteilhafterweise weitere Einrichtungen anhand der Eintragsmerkmale angesteuert werden.

Beispielsweise kann eine Kommunikation mit einem Kontakt eines elektronischen Adressbuchs initiiert werden, beispielsweise durch Wählen einer Rufnummer oder Aufrufen einer E-Mail-Adresse. Ferner kann eine Navigation zu einer Adresse eines Kontakts initiiert werden. Zudem können Bedienhandlungen für soziale Netzwerke vorgenommen werden. Es kann vorgesehen sein, dass Mediendateien auf verschiedene Weise verwendet werden, beispielsweise zur Wiedergabe, zur Anordnung in einer Wiedergabeliste, zum Speichern von Zusatzinformationen oder zum Markieren einer Datei.

Das erfindungsgemäße Fahrzeug umfasst eine erfindungsgemäße Bedienschnittstelle wie oben beschrieben. Es weist somit dieselben Vorteile auf wie die erfindungsgemäße Bedienschnittstelle.

Die Erfindung wird nun anhand von Ausführungsbeispielen mit Bezug zu den Zeichnungen erläutert.
Figur 1 zeigt ein Ausführungsbeispiel der erfindungsgemäßen Bedienschnittstelle in einem Fahrzeug,
Figur 2 zeigt ein Beispiel einer Datenstruktur für eine Liste zur Verwendung mit dem erfindungsgemäßen Verfahren,
Figuren 3A bis 3C zeigen ein erstes Ausführungsbeispiel des erfindungsgemäßen Verfahrens,
Figuren 4A und 4B zeigen ein zweites Ausführungsbeispiel des erfindungsgemäßen Verfahrens und
Figuren 5A und 5B zeigen ein drittes Ausführungsbeispiel des erfindungsgemäßen Verfahrens.

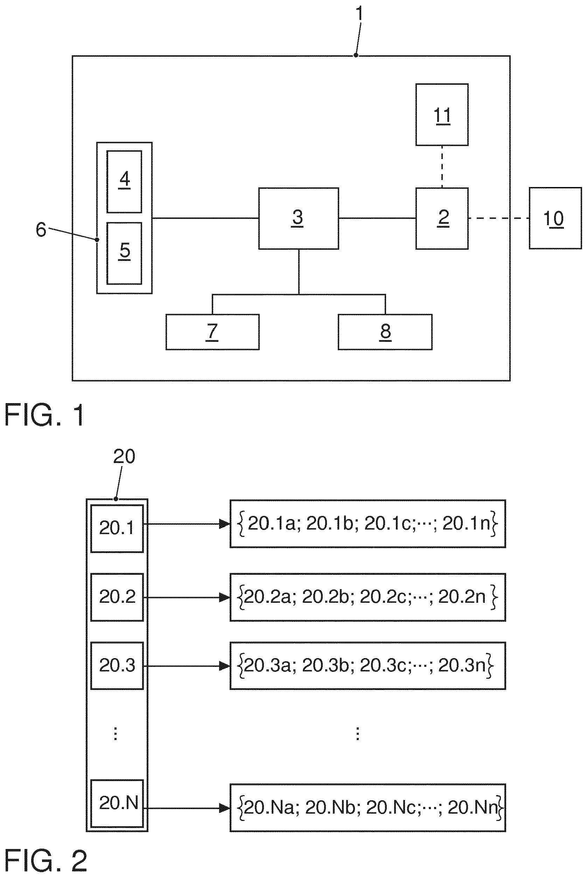

Mit Bezug zu Figur 1 wird ein Ausführungsbeispiel der erfindungsgemäßen Bedienschnittstelle in einem Fahrzeug erläutert.

Ein Fahrzeug 1 umfasst eine Steuereinheit 3, mit der eine Schnittstelle 2, ein Touchscreen 6, ein Navigationssystem 7 und eine Telekommunikationseinheit 8 gekoppelt sind.

Der Touchscreen 6 umfasst eine Anzeigeeinheit 4 und eine Erfassungseinheit 5. Der Touchscreen 6 ist auf an sich bekannte Weise gebildet, wobei die Erfassungseinheit 5 eine berührungsempfindliche Folie umfasst, die als berührungsempfindliche Oberfläche 5 über einer Anzeigefläche der Anzeigeeinheit 4 angeordnet ist und durch die eine Berührung mittels eines Betätigungsobjekts, insbesondere eines Fingers eines Nutzers, detektiert werden kann. Dabei werden eine Position und eine Dauer der Berührung sowie gegebenenfalls eine Veränderung der Position mit der Zeit erfasst.

Durch die Schnittstelle 2 ist auf an sich bekannte Weise eine trennbare datentechnische Verbindung zu einem externen Server 10, einen internen Speicher und/oder einem Mobilgerät 11 herstellbar. Bei dem Ausführungsbeispiel ist das Mobilgerät 11 ein Smartphone 11, welches in dem Fahrzeug 1 an die Schnittstelle 2 angeschlossen werden kann.

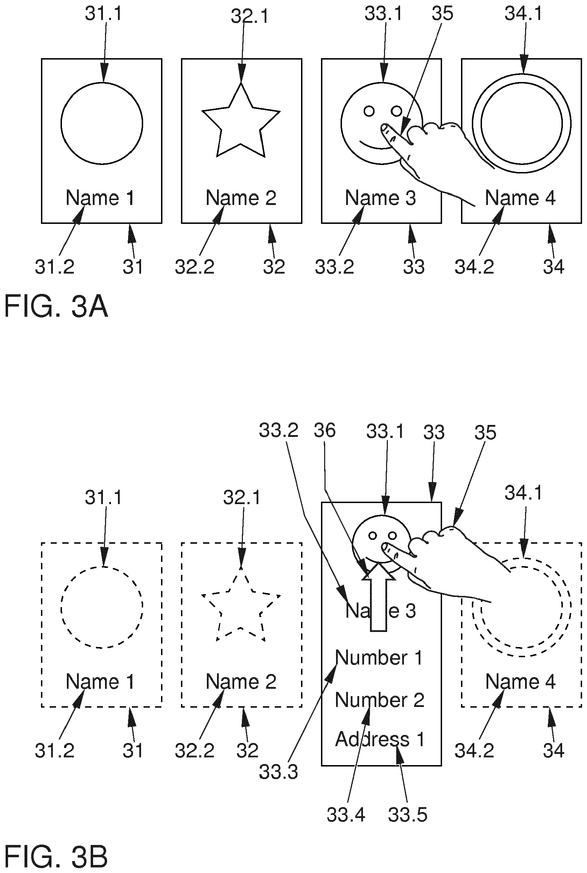

Mit Bezug zu den Figuren 2 und 3A bis 3 C wird ein erstes Ausführungsbeispiel des erfindungsgemäßen Verfahrens erläutert. Dabei wird von dem oben mit Bezug zu Figur 1 beschriebenen Ausführungsbeispiel der erfindungsgemäßen Bedienschnittstelle ausgegangen.

Das in Figur 2 gezeigte Schema verdeutlicht ein Beispiel einer Datenstruktur für eine Liste, welche für das erfindungsgemäße Verfahren verwendet werden kann. Eine Liste 20 umfasst datentechnische Einheiten, die als Listeneinträge 20.1 bis 20.N bezeichnet werden. Jedem der Listeneinträge 20.1 bis 20.N sind Eintragsmerkmale 20.1a bis 20.Nn zugeordnet. Die Liste 20 wird auf an sich bekannte Weise gespeichert und kann datentechnisch verarbeitet werden, bei dem dargestellten Beispiel durch das Smartphone 11. Dabei umfasst das Smartphone 11 eine Datenbank, mittels derer die durch die Liste 20 repräsentierten Daten bereitgestellt werden können.

Bei der Erfindung werden zunächst die Daten der Liste 20 durch die Schnittstelle 2 von dem Smartphone 11 erfasst. In weiteren Ausführungsbeispielen können alternativ oder zusätzlich Daten von dem externen Server 10 oder einem internen Speicher erfasst werden. Zudem können Daten von einer Speichereinheit des Fahrzeugs 1 bereitgestellt werden. Werden Daten von mehreren Quellen erfasst, so kann vorgesehen sein, dass diese Daten durch die Steuereinheit 3 des Fahrzeugs 1 zu einer Liste 20 vereinigt werden.

Bei dem ersten Ausführungsbeispiel umfasst die Liste 20 Einträge eines digitalen Telefonbuchs, wobei Einträge 20.1 bis 20.N Kontakten entsprechen, zu denen jeweils Informationen gespeichert sind, wie etwa Namen, Telefonnummern, Adressen, E-Mail-Adressen, Kontaktdaten für soziale oder andere Netzwerke, Bilder, weitere Zusatzinformationen und/oder Bedienmöglichkeiten, anhand derer bestimmte Einrichtungen angesteuert werden können. In weiteren Ausführungsbeispielen können andere Kategorien von Listeneinträgen 20.1 bis 20.N vorgesehen sein und die zugeordneten Eintragsmerkmale 20.1a bis 20.Nn können entsprechende Informationen und/oder Bedienmöglichkeiten umfassen.

Es wird eine Listendarstellung erzeugt, wie sie in Figur 3A beispielhaft dargestellt ist, und durch die Anzeigeeinheit 4 des Touchscreens 6 ausgegeben. Die Listendarstellung umfasst Anzeigebereiche 31, 32, 33, 34, die jeweils einem Listeneintrag 20.1 bis 20.N zugeordnet sind und deren äußere Begrenzungen in der Figur als durchgezogene Linie dargestellt sind. Es kann vorgesehen sein, dass diese äußere Begrenzung nicht dargestellt wird oder dass die Anzeigeflächen 31, 32, 33, 34 auf andere Weise hervorgehoben werden, beispielsweise durch eine Hintergrundfarbe, die sich von dem Hintergrund der übrigen Fläche der Anzeigeeinheit 4 abhebt. Aufgrund der begrenzten Fläche, die für die Anzeige zur Verfügung steht, wird lediglich eine Teilmenge der Listeneinträge 20.1 bis 20.N der Liste 20 angezeigt, im dargestellten Fall vier Einträge.

In den vier Anzeigebereichen 31 bis 34 werden Informationen über jeweils einen der Listeneinträge 20.1 bis 20.N angezeigt, wobei jeweils ein Symbolobjekt 31.1, 32.1, 33.1, 34.1 sowie ein Eintragsmerkmal, im dargestellten Fall jeweils ein Kontaktname 31.2, 32.2, 33.2, 34.2 angezeigt wird.

In Figur 3A ist ferner eine Hand 35 eines Nutzers angedeutet, die mit einem Finger die berührungsempfindliche Oberfläche 5 des Touchscreens 6 berührt. Dabei wird die Position der Berührung erfasst, welche sich in dem Beispiel im Bereich des Symbolobjekt 33.1 der dritten Anzeigefläche 33 befindet.

Figur 3B zeigt einen Fall, bei dem durch die Hand 35 eine Aufwärtsbewegung entlang des Pfeils 36 im Anschluss an die in Figur 3A dargestellte Berührung der berührungsempfindlichen Oberfläche 5 durchgeführt wurde. Mittels dieser auf der berührungsempfindlichen Oberfläche 5 ausgeführten Geste wird eine Verschiebung des Symbolobjektes 33.1, welches der Position der Berührung zugeordnet ist, nach oben erzeugt. Die Verschiebung betrifft dabei den Schwerpunkt des Symbolobjekt 33.1, das heißt, auch bei einer gleichzeitigen Veränderung etwa der Größe oder des Umrisse des Symbolobjektes 33.1 wird eine Veränderung der Position des Symbolobjektes in Richtung der Bewegungsrichtung 36 dargestellt.

Die Verschiebung des Symbolobjekt 33.1 erfolgt synchron mit der Bewegung, das heißt, das Symbolobjekt 33.1 wird mit der gleichen Geschwindigkeit und in die gleiche Richtung senkrecht nach oben verschoben, wie dies für die Bewegung der Hand 35 während der Berührung der berührungsempfindlichen Oberfläche 5 erfasst wird. Auf diese Weise entsteht der Eindruck, dass das Symbolobjekt 33.1 durch die Verschiebung der Position der Berührung wie ein physisches Objekt verschoben wird. Alternativ oder zusätzlich können weitere Parameter der Bewegung berücksichtigt werden, beispielsweise eine virtuelle Trägheit oder eine Abweichung der Verschiebung des Symbolobjekt 33 1 von der Verschiebung der Berührungsposition, etwa indem die Verschiebung langsamer oder schneller als die Bewegung der Hand 35 angezeigt wird.

Bei dem Ausführungsbeispiel wird ferner das Symbolobjekt 33.1 skaliert und im Anschluss an die Verschiebung verkleinert dargestellt. Auch die Verkleinerung erfolgt, ähnlich wie die Verschiebung, synchron mit der Bewegung der Hand 35 entlang der Bewegungsrichtung 36.

In weiteren Ausführungsbeispielen wird eine Berührung des Anzeigebereich 33 durch die Hand 35 auf analoge Weise interpretiert, wenn die Position der Berührung nicht im Bereich des Symbolobjekt 33 1 detektiert wird. Das heißt, der Finger muss nicht genau das Symbolobjekt 33 1 bedienen, sondern die Berührung kann in einem beliebigen Bereich des dem Symbolobjekt 33.1 zugeordneten Anzeigebereichs 33 erfasst werden.

In Figur 3B ist durch gestrichelte Linien angedeutet, dass die Anzeigeflächen 31, 32, 34, welche den nicht bedienten Symbolobjekten 31.1, 32.1, 34.1 zugeordnet sind, dunkler dargestellt werden als zuvor in Figur 3A dargestellt. Ferner wird die Anzeigefläche 33, die dem bedienten Symbolobjekt 33.1 zugeordnet ist, größer dargestellt, wobei eine Streckung des Anzeigebereichs 33 in vertikaler Richtung erfolgt, das heißt in eine Richtung entlang der Bewegungsrichtung 36. Das heißt, bei dem in Figur 3B dargestellten Fall ist der Anzeigebereich 33 vergrößert dargestellt, nachdem eine Bedienhandlung mit einer Eingabebewegung entlang der Bewegungsrichtung 36 auf der berührungsempfindlichen Oberfläche 5 des Touchscreens 6 erfasst wurde. Auf diese Weise steht eine größere Fläche zur Verfügung, um Zusatzinformationen 33.3, 33.4, 33.5 zusätzlich zu dem Kontaktnamen 33.2 anzuzeigen.

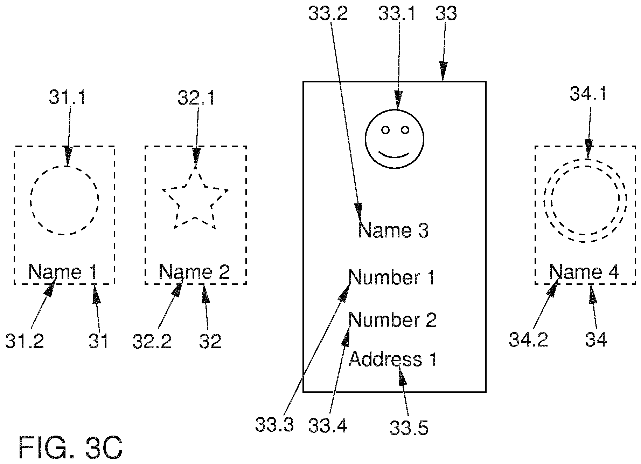

Figur 3C zeigt einen Fall, bei dem die Anzeigefläche 33 des bedienten Symbolobjekt 33.1 zusätzlich zur Streckung in vertikaler Richtung auch in horizontaler Richtung vergrößert wurde. Ferner sind in diesem Fall die nicht bedienten Anzeigeflächen 31, 32, 34 verkleinert und mit größerem Abstand zu der bedienten Anzeigefläche 33 dargestellt.

In weiteren Ausführungsbeispielen kann die Anzeigefläche 33, für die eine Bedienhandlung erfasst wurde, auf andere Weise verändert werden. In jedem Fall vergrößert sich die für den betreffenden Listeneintrag 20.1 bis 20.N zur Verfügung stehende Fläche. Ferner können verschiedene Transformationen der nicht bedienten Anzeigebereiche 31, 33, 34 vorgesehen sein, beispielsweise eine, gegebenenfalls perspektivisch dargestellte, Verschiebung, ein Ausblenden oder eine Veränderung ihrer Größe.

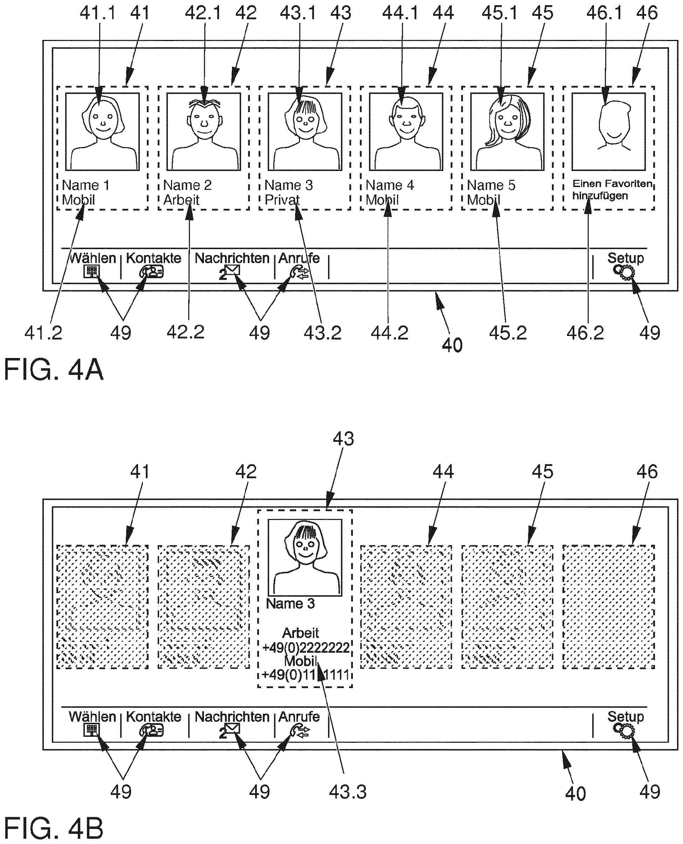

Mit Bezug zu den Figuren 4A und 4B wird ein zweites Ausführungsbeispiel des erfindungsgemäßen Verfahrens erläutert.

Das zweite Ausführungsbeispiel wird analog zu dem oben erläuterten ersten Ausführungsbeispiel ausgeführt.

Figur 4A zeigt eine Darstellung 40, die als grafische Bedienoberfläche 40 ausgebildet ist und durch die Anzeigeeinheit 4 angezeigt wird. Dabei kann vorgesehen sein, dass die Darstellung 40 lediglich durch einen Teilbereich der Anzeigefläche der Anzeige 104 angezeigt wird, beispielsweise eines Fensters, eines Anzeigebereichs oder als Widget. Die gesamte Anzeige der Anzeigeeinheit 4 wird dabei auf an sich bekannte Weise gebildet, wobei im Folgenden lediglich der durch das erfindungsgemäße Verfahren erzeugte Teil der Anzeige dargestellt ist.

Eine Teilmenge der Listeneinträge 20.1 bis 20.N werden als Listendarstellung ausgegeben, wobei ein Nutzer die dargestellte Teilmenge selbst konfigurieren kann, indem er einzelne Kontakte, das heißt einzelne Listeneinträge 20.1 bis 20.N der Liste 20, als Favoriten definiert. Die Anzeigeflächen 41, 42, 43, 44, 45, 46 sind jeweils einem Listeneintrag 20.1 bis 20.N der Teilmenge zugeordnet, wobei eine Anzeigefläche 46 vorgesehen ist, die durch den Nutzer mit einem eigenen Favoriten belegt werden kann. Das heißt, die Teilmenge umfasst in dem gezeigten Fall fünf Favoriten, während eine weitere Anzeigefläche 46 für einen weiteren Favoriten zur Verfügung steht.

Ferner sind Schaltflächen 49 vorgesehen, durch die im dargestellten Fall verschiedene Funktionen konfiguriert oder aufgerufen werden können. In diesem Fall kann eine Rufnummer gewählt werden, es können weitere Kontakte aufgerufen werden, es können Textnachrichten aufgerufen, verwaltet oder neu erstellt werden und es kann eine Liste bereits durchgeführter Anrufe aufgerufen werden. Ferner kann ein Einstellungsmenü geöffnet werden.

Für die den Anzeigeflächen 41, 42, 43, 44, 45, 46 zugeordneten Listeneinträge 20.1 bis 20.N wird jeweils ein Profilbild als Symbolobjekt 41.1, 42.1, 43.1, 44.1, 45.1, 46.1 ausgegeben. Dabei weist die Anzeigefläche 46, welcher derzeit noch kein Listeneintrag 20.1 bis 20.N zugeordnet ist, ein vorgegebenes Symbolobjekt 46.1 auf. Ferner werden Kontakte nahmen 41.2 bis 46.2 angezeigt, die zusätzlich zu den Symbolbildern 41.1 bis 46.1 eine Identifikation der Kontakte erleichtern.

Der Übergang von dem in Figur 4A zu dem in Figur 4B gezeigten Fall erfolgt in Abhängigkeit von einer Bedienhandlung, bei der, ähnlich wie bereits oben für Figur 3B erläutert, eine Eingabebewegung für ein Symbolobjekt 41.1 bis 46.1 erfasst wird. Das bediente Symbolobjekt 43.1 wird in vertikaler Richtung verschoben und verkleinert, während der zugeordnete Anzeigebereich 43 vergrößert wird. Es werden weitere Zusatzinformationen 43.3 angezeigt, die im dargestellten Fall mehrere verfügbare Telefonnummern für den zugeordneten Kontakt umfassen.

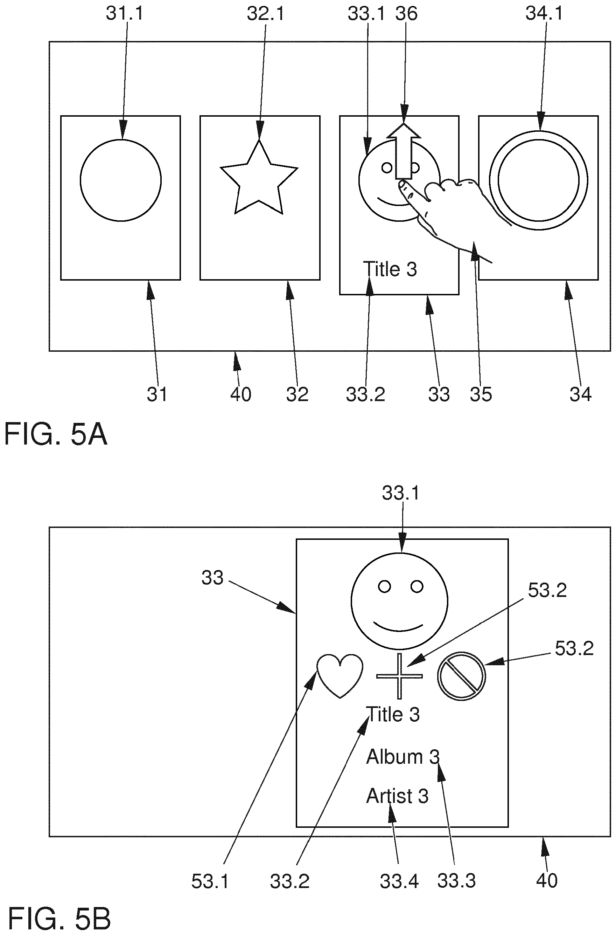

Mit Bezug zu den Figuren 5A und 5B wird ein drittes Ausführungsbeispiel des erfindungsgemäßen Verfahrens erläutert. Das dritte Ausführungsbeispiel wird analog zu dem oben erläuterten zweiten Ausführungsbeispiel ausgeführt. Die Liste 20 betrifft im Falle des dritten Ausführungsbeispiels verschiedene Musiktitel.

Bei der in Figur 5A gezeigten Listendarstellung sind vier Anzeigeflächen 31, 32, 33, 34 dargestellt, die einzelnen Musiktiteln entsprechen. Durch Symbolobjekte 31.1 bis 34.1 werden die einzelnen Titel repräsentiert, insbesondere durch ein Bild des jeweiligen Albumcovers. Lediglich bei einem derzeit abgespielten Musiktitel, welchem der dritte Anzeigebereich 33 zugeordnet ist, wird auch der Titel 33.2 als Text angezeigt. Durch einen Finger der Hand 35 wird in Bewegungsrichtung 36 eine Schiebebewegung ausgehend von einer Position im Bereich des Symbolobjekt 33.1 nach oben hin durchgeführt.

Bei dem in Figur 5B dargestellten Fall einer Detaildarstellung sind gegenüber der Listendarstellung in Figur 5A die nicht bedienten Anzeigeflächen 31, 33, 34 ausgeblendet. Die bediente Anzeigefläche 33 nimmt dagegen größeren Raum ein, sowohl in vertikaler als auch in horizontaler Richtung. Neben dem Symbolobjekt 33.1 und dem Titel 33.2 werden weitere Zusatzinformationen 33.3, 33.4 angezeigt, bei dem dargestellten Beispiel der Name des Albums, zu dem der Musiktitel gehört, sowie der Name eines zugeordneten Künstlers.

Ferner werden Bedienmöglichkeiten 53.1, 53.2, 53.3 dargestellt. Diese werden als Schaltflächen gebildet, das heißt, ein Nutzer kann durch Berühren des Touchscreens 6 im Bereich einer angezeigten Bedienmöglichkeiten 53.1, 53.2, 53.3 eine bestimmte Funktion betätigen, deren Parameter anhand der betätigten Bedienmöglichkeiten 53.1, 53.2, 53.3 gebildet wird. Im dargestellten Fall wird ein erstes Symbol einer Bedienmöglichkeiten 53.1 als Herz-Symbol dargestellt, welches eine Markierung des Musiktitels als Favorit ("Liken" des Musiktitels) erlaubt, wobei die Markierung beispielsweise an eine Anwendung für ein soziales Netzwerk übermittelt und/oder als Eigenschaft der zugeordneten Mediendatei etwa für die Erstellung künftiger Playlisten berücksichtigt werden kann. Ein zweites Symbol einer Bedienmöglichkeiten 53.2 wird als Plus-Symbol dargestellt, welches bei dem Ausführungsbeispiel einem Befehl an ein Wiedergabeprogramm für Mediendateien entspricht, eine Playlist mit ähnlichen Titeln zu erstellen. Ferner ist ein drittes Symbol einer Bedienmöglichkeiten 53.3 vorgesehen, welches eine Löschung des Musiktitels aus der aktuellen Playliste bewirkt.

Alternativ oder zusätzlich können weitere Bedienmöglichkeiten vorgesehen sein, insbesondere für andere Anwendungen.

Die verschiedenen beschriebenen Darstellung- und Bedienungsmöglichkeiten können beliebig für unterschiedliche Typen von Listen verwendet werden, insbesondere für unterschiedliche Datei- und Informationstypen.

### Bezugszeichenliste

1 Fahrzeug
2 Schnittstelle
3 Steuereinheit
4 Anzeigeeinheit
5 Erfassungseinheit; berührungsempfindliche Oberfläche
6 Touchscreen
7 Navigationssystem
8 Telekommunikationseinheit
10 externer Server
11 Mobilgerät; Smartphone
20 Liste
20.1; 20.2; 20.3; 20.N Listeneinträge
20.1a; 20.1b; 20.1c; 20.1n Eintragsmerkmale (Listeneintrag 20.1)
20.2a; 20.2b; 20.2c; 20.2n Eintragsmerkmale (Listeneintrag 20.2)
20.3a; 20.3b; 20.3c; 20.3n Eintragsmerkmale (Listeneintrag 20.3)
20.Na; 20.Nb; 20.Nc; 20.Nn Eintragsmerkmale (Listeneintrag 20.N)
31; 32; 33; 34 Anzeigebereiche
31.1; 32.1; 33.1; 34.1 Symbolobjekte; Symbolbilder
31.2; 32.2; 33.2; 34.2 Kontaktname
33.3; 33.4; 33.5 Zusatzinformationen
35 Hand
36 Pfeil; Bewegungsrichtung
40 Darstellung; grafische Bedienoberfläche
41; 42; 43; 44; 45; 46 Anzeigebereiche
41.1; 42.1; 43.1; 44.1; 45.1; 46.1 Symbolobjekte; Symbolbilder
41.2; 42.2; 43.2; 44.2; 45.2; 46.2 Kontaktname
43.3 Zusatzinformationen (Anzeige)
49 Schaltfläche
53.1; 53.2; 53.3 Bedienmöglichkeiten (Anzeige)

## Patentansprüche

1. Verfahren zum Betreiben feiner Bedienschnittstelle, bei dem
Daten einer Liste (20) erfasst werden, wobei die Liste (20) Listeneinträge (20.1 bis 20.N) umfasst und den Listeneinträgen (20.1 bis 20.N) jeweils Eintragsmerkmale (20.1a bis 20.Nn) zugeordnet sind;
eine Listendarstellung mit grafischen Symbolobjekten (31.1 bis 34.1) für zumindest eine Teilmenge der Listeneinträge (20.1 bis 20.N) erzeugt und angezeigt wird; wobei
den grafischen Symbolobjekten (31.1 bis 34.1) jeweils ein Anzeigebereich (31; 32; 33; 34) zugeordnet ist;
eine Bedienhandlung für ein Symbolobjekt (31.1 bis 34.1) eines Listeneintrags (20.1 bis 20.N) erfasst wird; wobei
die Bedienhandlung eine Eingabebewegung mit einer Eingaberichtung umfasst; und
eine Detaildarstellung für das bediente Symbolobjekt (31.1 bis 34.1) erzeugt und angezeigt wird; wobei
in Abhängigkeit von der Eingaberichtung der Bedienhandlung eine Verschiebung des bedienten Symbolobjekts (31.1 bis 34.1) relativ zu der Listendarstellung angezeigt wird; und
die dargestellte Teilmenge der zugeordneten Eintragsmerkmale (20.1a bis 20.Nn) bei der Detaildarstellung größer ist als bei der Listendarstellung, wobei
das Symbolobjekt (31.1 bis 34.1) bei der Detaildarstellung gegenüber der Listendarstellung verkleinert ist,
**dadurch gekennzeichnet, dass**
die Verkleinerung proportional zu dem bei der Verschiebung zurückgelegten Weg des Symbolobjekts (31.1 bis 34.1) durchgeführt wird, wobei
die Symbolobjekte (31.1 bis 34.1) der Listendarstellung in einer Reihe entlang einer Erstreckungsrichtung angeordnet sind und die Bedienhandlung eine Schiebegeste in eine Richtung senkrecht zu der Erstreckungsrichtung umfasst.

2. Verfahren gemäß Anspruch 1,
**dadurch gekennzeichnet, dass**
die Verschiebung des bedienten Symbolobjekts (31.1 bis 34.1) eine Bewegung eines geometrischen Schwerpunkts des Symbolobjekts (31.1 bis 34.1) in Richtung der Eingaberichtung der Bedienhandlung umfasst.

3. Verfahren gemäß einem der vorhergehenden Ansprüche,
**dadurch gekennzeichnet, dass**
die Verschiebung des Symbolobjekts (31.1 bis 34.1) synchron zu der erfassten Bedienhandlung gebildet wird.

4. Verfahren gemäß einem der vorhergehenden Ansprüche,
**dadurch gekennzeichnet, dass**
der dem bedienten Symbolobjekt (31.1 bis 34.1) zugeordnete Anzeigebereich (31; 32; 33; 34) vergrößert wird.

5. Verfahren gemäß einem der vorhergehenden Ansprüche,
**dadurch gekennzeichnet, dass**
Symbolobjekte (31.1 bis 34.1), für die keine Bedienung erfasst wurde, bei der Detaildarstellung gegenüber dem bedienten Symbolobjekt (31.1 bis 34.1) dunkler angezeigt werden.

6. Verfahren gemäß einem der vorhergehenden Ansprüche,
**dadurch gekennzeichnet, dass**
die Listeneinträge (20.1 bis 20.N) Kontakte eines elektronischen Telefonbuchs oder Mediendateien sind, wobei die Eintragsmerkmale (20.1a bis 20.Nn) Zusatzinformationen und/oder Bedienmöglichkeiten umfassen.

7. Verfahren gemäß einem der vorhergehenden Ansprüche,
**dadurch gekennzeichnet, dass**
ferner während der Anzeige der Detaildarstellung eine zweite Bedienhandlung erfasst wird und
anhand der zweiten Bedienhandlung die Listendarstellung erzeugt und angezeigt wird, wobei eine Zurückverschiebung des Symbolobjekts (31.1 bis 34.1) angezeigt wird.

8. Verfahren gemäß einem der vorhergehenden Ansprüche,
**dadurch gekennzeichnet, dass**
die in der Detailansicht angezeigten Eintragsmerkmale (20.1a bis 20.Nn) als bedienbare Grafikelemente angezeigt werden.

9. Bedienschnittstelle mit
einer Schnittstelle (2), durch die Daten einer Liste (20) erfassbar sind, wobei die Liste (20) Listeneinträge (20.1 bis 20.N) umfasst und den Listeneinträgen (20.1 bis 20.N) jeweils Eintragsmerkmale (20.1a bis 20.Nn) zugeordnet sind;
einer Steuereinheit (3), durch die eine Listendarstellung mit grafischen Symbolobjekten (31.1 bis 34.1) für zumindest eine Teilmenge der Listeneinträge (20.1 bis 20.N) erzeugbar und mittels einer Anzeigeeinheit (4) anzeigbar ist; wobei
den grafischen Symbolobjekten (31.1 bis 34.1) jeweils ein Anzeigebereich (31; 32; 33; 34) zugeordnet ist;
einer Erfassungseinheit (5), die durch eine Bedienhandlung für ein Symbolobjekt (31.1 bis 34.1) eines Listeneintrags (20.1 bis 20.N) erfassbar ist; wobei
die Bedienhandlung eine Eingabebewegung mit einer Eingaberichtung umfasst; und
eine Detaildarstellung für das bediente Symbolobjekt (31.1 bis 34.1) erzeugbar und anzeigbar ist; wobei
in Abhängigkeit von der Eingaberichtung der Bedienhandlung eine Verschiebung des bedienten Symbolobjekts (31.1 bis 34.1) relativ zu der Listendarstellung anzeigbar ist; und
die dargestellte Teilmenge der zugeordneten Eintragsmerkmale (20.1a bis 20.Nn) bei der Detaildarstellung größer ist als bei der Listendarstellung, wobei
das Symbolobjekt (31.1 bis 34.1) bei der Detaildarstellung gegenüber der Listendarstellung verkleinert ist,
**dadurch gekennzeichnet, dass**
die Verkleinerung proportional zu dem bei der Verschiebung zurückgelegten Weg des Symbolobjekts (31.1 bis 34.1) durchführbar ist, wobei
die Symbolobjekte (31.1 bis 34.1) der Listendarstellung in einer Reihe entlang einer Erstreckungsrichtung angeordnet sind und die Bedienhandlung eine Schiebegeste in eine Richtung senkrecht zu der Erstreckungsrichtung umfasst.

10. Bedienschnittstelle gemäß Anspruch 9,
**dadurch gekennzeichnet, dass**
die Erfassungseinheit (5) eine berührungsempfindliche Oberfläche umfasst.

11. Bedienschnittstelle gemäß Anspruch 9 oder 10,
**dadurch gekennzeichnet, dass**
die Daten der Liste (20) mittels der Schnittstelle von einem mobilen Nutzergerät (11) erfassbar sind.

12. Bedienschnittstelle gemäß einem der Ansprüche 9 bis 11,
**dadurch gekennzeichnet, dass**
während der Darstellung der Detailansicht eine Betätigungshandlung für eines der angezeigten Eintragsmerkmale (20.1a bis 20.Nn) erfassbar ist und
in Abhängigkeit von dem betätigten Eintragsmerkmal (20.1a bis 20.Nn) Steuersignale für eine weitere Einrichtung (7; 8) erzeugbar und ausgebbar sind.

13. Fahrzeug (1) mit einer Bedienschnittstelle gemäß einem der Ansprüche 9 bis 12.

## Claims

1. Method for operating a user interface, in which data of a list (20) are captured, the list (20) comprising list entries (20.1 to 20.N) and the list entries (20.1 to 20.N) each having associated entry features (20.1a to 20.Nn);
a list representation containing graphical symbol objects (31.1 to 34.1) for at least one subset of the list entries (20.1 to 20.N) is generated and displayed; wherein
the graphical symbol objects (31.1 to 34.1) each have an associated display area (31; 32; 33; 34);
a user control action for a symbol object (31.1 to 34.1) of a list entry (20.1 to 20.N) is detected; wherein
the user control action comprises an input movement with an input direction; and
a detail representation for the controlled symbol object (31.1 to 34.1) is generated and displayed; wherein
the input direction of the user control action is taken as a basis for displaying a displacement of the controlled symbol object (31.1 to 34.1) relative to the list representation; and
the represented subset of associated entry features (20.1a to 20.Nn) is larger in the detail representation than in the list representation, wherein
the symbol object (31.1 to 34.1) is reduced in the detail representation as compared with the list representation,
**characterized in that**
the reduction is performed in proportion to the distance covered by the symbol object (31.1 to 34.1) during the displacement, wherein
the symbol objects (31.1 to 34.1) of the list representation are arranged in a row along a direction of extent and the user control action comprises a sliding gesture in a direction perpendicular to the direction of extent.

2. Method according to Claim 1,
**characterized in that**
the displacement of the controlled symbol object (31.1 to 34.1) comprises a movement of a geometric centre of the symbol object (31.1 to 34.1) in the direction of the input direction of the user control action.

3. Method according to either of the preceding claims,
**characterized in that**
the displacement of the symbol object (31.1 to 34.1) is formed in sync with the detected user control action.

4. Method according to one of the preceding claims, **characterized in that**
the display area (31; 32; 33; 34) associated with the controlled symbol object (31.1 to 34.1) is enlarged.

5. Method according to one of the preceding claims, **characterized in that**
symbol objects (31.1 to 34.1) for which no user control was detected are displayed darker in the detail representation as compared with the controlled symbol object (31.1 to 34.1).

6. Method according to one of the preceding claims, **characterized in that**
the list entries (20.1 to 20.N) are contacts in an electronic phone book or are media files, the entry features (20.1a to 20.Nn) comprising additional information and/or user control options.

7. Method according to one of the preceding claims, **characterized in that**
a second user control action is also detected during the display of the detail representation and
the second user control action is taken as a basis for generating and displaying the list representation, a return displacement of the symbol object (31.1 to 34.1) being displayed.

8. Method according to one of the preceding claims, **characterized in that**
the entry features (20.1a to 20.Nn) displayed in the detail view are displayed as operable graphics elements.

9. User interface having
an interface (2) by means of which data of a list (20) can be captured, the list (20) comprising list entries (20.1 to 20.N) and the list entries (20.1 to 20.N) each having associated entry features (20.1a to 20.Nn);
a control unit (3) by means of which a list representation containing graphical symbol objects (31.1 to 34.1) for at least one subset of the list entries (20.1 to 20.N) can be generated and can be displayed by means of a display unit (4); wherein
the graphical symbol objects (31.1 to 34.1) each have an associated display area (31; 32; 33; 34);
a detection unit (5) by means of which a user control action for a symbol object (31.1 to 34.1) of a list entry (20.1 to 20.N) can be detected; wherein
the user control action comprises an input movement with an input direction; and
a detail representation for the controlled symbol object (31.1 to 34.1) can be generated and displayed; wherein
the input direction of the user control action can be taken as a basis for displaying a displacement of the controlled symbol object (31.1 to 34.1) relative to the list representation; and
the represented subset of associated entry features (20.1a to 20.Nn) is larger in the detail representation than in the list representation, wherein
the symbol object (31.1 to 34.1) is reduced in the detail representation as compared with the list representation,
**characterized in that**
the reduction can be performed in proportion to the distance covered by the symbol object (31.1 to 34.1) during the displacement, wherein
the symbol objects (31.1 to 34.1) of the list representation are arranged in a row along a direction of extent and the user control action comprises a sliding gesture in a direction perpendicular to the direction of extent.

10. User interface according to Claim 9,
**characterized in that**
the detection unit (5) comprises a touch-sensitive surface.

11. User interface according to Claim 9 or 10, **characterized in that**
the data of the list (20) can be captured from a mobile user device (11) by means of the interface.

12. User interface according to one of Claims 9 to 11, **characterized in that**
an actuating action for one of the displayed entry features (20.1a to 20.Nn) can be detected during the representation of the detail view and
the actuated entry feature (20.1a to 20.Nn) can be taken as a basis for generating and outputting control signals for a further device (7; 8).

13. Vehicle (1) having a user interface according to one of Claims 9 to 12.

## Revendications

1. Procédé permettant de faire fonctionner une interface utilisateur, dans lequel
des données sur une liste (20) sont détectées, la liste (20) comprenant des entrées de liste (20.1 à 20.N) et des caractéristiques d'entrée (20.1a à 20.Nn) étant respectivement associées aux entrées de liste (20.1 à 20.N) ;
une représentation sous forme de liste avec des symboles graphiques (31.1 à 34.1) est créée et affichée pour au moins un sous-ensemble des entrées de liste (20.1 à 20.N) ; dans lequel
une zone d'affichage (31; 32 ; 33 ; 34) est respectivement associée aux symboles graphiques (31.1 à 34.1) ;
une manipulation pour un symbole (31.1 à 34.1) d'une entrée de liste (20.1 à 20.N) est détectée ; dans lequel
la manipulation comprend un mouvement d'entrée ayant une direction d'entrée ; et
une représentation détaillée est créée et affichée pour le symbole manipulé (31.1 à 34.1) ; dans lequel
en fonction de la direction d'entrée de la manipulation, un décalage du symbole manipulé (31.1 à 34.1) par rapport à la représentation sous forme de liste est affiché ; et
le sous-ensemble représenté des caractéristiques d'entrée associées (20.1a à 20.Nn) est plus grand sur la représentation détaillée que sur la représentation sous forme de liste, dans lequel
le symbole (31.1 à 34.1) sur la représentation détaillée est réduit par rapport à la représentation sous forme de liste,
**caractérisé en ce que** la réduction est effectuée proportionnellement au chemin parcouru lors du décalage du symbole (31.1 à 34.1), dans lequel
les symboles (31.1 à 34.1) de la représentation sous forme de liste sont disposés sur une rangée le long d'une direction d'extension, et la manipulation comprend un geste de glissement dans une direction perpendiculaire à la direction d'extension.

2. Procédé selon la revendication 1, **caractérisé en ce que** le décalage du symbole manipulé (31.1 à 34.1) comprend un déplacement d'un centre de gravité géométrique du symbole (31.1 à 34.1) dans le sens de la direction d'entrée de la manipulation.

3. Procédé selon l'une quelconque des revendications précédentes, **caractérisé en ce que** le décalage du symbole (31.1 à 34.1) est réalisé de manière synchrone à la manipulation détectée.

4. Procédé selon l'une quelconque des revendications précédentes, **caractérisé en ce que** la zone d'affichage (31 ; 32 ; 33 ; 34) associée au symbole manipulé (31.1 à 34.1) est agrandie.

5. Procédé selon l'une quelconque des revendications précédentes, **caractérisé en ce que** des symboles (31.1 à 34.1) pour lesquels aucune manipulation n'a été détectée sont affichés plus sombres sur la représentation détaillée par rapport au symbole manipulé (31.1 à 34.1).

6. Procédé selon l'une quelconque des revendications précédentes, **caractérisé en ce que** les entrées de liste (20.1 à 20.N) sont des contacts d'un répertoire téléphonique électronique ou des fichiers multimédia, les caractéristiques d'entrée (20.1a à 20.Nn) comprenant des informations supplémentaires et/ou des options de manipulation.

7. Procédé selon l'une quelconque des revendications précédentes, **caractérisé en ce que**
en outre pendant l'affichage de la représentation détaillée, une deuxième manipulation est détectée, et
la représentation sous forme de liste est créée et affichée à l'aide de la deuxième manipulation, dans lequel un décalage de retour du symbole (31.1 à 34.1) est affiché.

8. Procédé selon l'une quelconque des revendications précédentes, **caractérisé en ce que** les caractéristiques d'entrée (20.1a à 20.Nn) affichées sur la vue détaillée sont affichées sous forme d'éléments graphiques pouvant être manipulés.

9. Interface utilisateur comprenant
une interface (2) permettant de détecter les données d'une liste (20), la liste (20) comprenant des entrées de liste (20.1 à 20.N), et des caractéristiques d'entrée (20.1a à 20.Nn) étant respectivement associées aux entrées de liste (20.1 à 20.N) ;
une unité de commande (3) qui permet de créer une représentation sous forme de liste avec des symboles graphiques (31.1 à 34.1) pour au moins un sous-ensemble des entrées de liste (20.1 à 20.N) et de l'afficher au moyen d'une unité d'affichage (4) ; dans lequel
respectivement une zone d'affichage (31 ; 32 ; 33 ; 34) est associée aux symboles graphiques (31.1 à 34.1) ;
une unité de détection (5) permettant de détecter une manipulation pour un symbole (31.1 à 34.1) d'une entrée de liste (20.1 à 20.N) ; dans lequel
la manipulation comprend un mouvement d'entrée ayant une direction d'entrée ; et
une représentation détaillée pour le symbole manipulé (31.1 à 34.1) peut être créée et affichée ; dans lequel
en fonction de la direction d'entrée de la manipulation, un décalage du symbole manipulé (31.1 à 34.1) par rapport à la représentation sous forme de liste peut être affiché ; et
le sous-ensemble représenté des caractéristiques d'entrée associées (20.1a à 20.Nn) sur la représentation détaillée est plus grand que sur la représentation sous forme de liste, dans lequel
le symbole (31.1 à 34.1) sur la représentation détaillée est réduit par rapport à la représentation sous forme de liste,
**caractérisé en ce que**
la réduction peut être réalisée de manière proportionnelle au chemin parcouru par le symbole (31.1 à 34.1) lors du décalage, dans lequel
les symboles (31.1 à 34.1) de la représentation sous forme de liste sont disposés sur une rangée le long d'une direction d'extension et la manipulation comprend un geste de glissement dans une direction perpendiculaire à la direction d'extension.

10. Interface utilisateur selon la revendication 9, **caractérisé en ce que** l'unité de détection (5) comprend une surface tactile.

11. Interface utilisateur selon la revendication 9 ou 10, **caractérisé en ce que** les données de la liste (20) peuvent être détectées au moyen de l'interface par un terminal utilisateur mobile (11).

12. Interface utilisateur selon l'une quelconque des revendications 9 à 11, **caractérisé en ce que**
pendant la représentation de la vue détaillée, une manipulation pour l'une des caractéristiques d'entrée (20.1a à 20.Nn) affichées peut être détectée, et
en fonction de la caractéristique d'entrée actionnée (20.1a à 20.Nn), des signaux de commande pour un dispositif supplémentaire (7 ; 8) peuvent être créés et sortis.

13. Véhicule (1) comprenant une interface utilisateur selon l'une quelconque des revendications 9 à 12.
